Europäisches Patentamt

European Patent Office

Office européen des brevets

(19)

(11) Veröffentlichungsnummer: **0 020 971**
**A1**

# (12) EUROPÄISCHE PATENTANMELDUNG

(21) Anmeldenummer: **80102557.8**

(22) Anmeldetag: **09.05.80**

(51) Int. Cl.³: **G 01 N 21/57**

(30) Priorität: **15.06.79 DE 2924241**

(43) Veröffentlichungstag der Anmeldung: **07.01.81**
**Patentblatt 81/1**

(84) Benannte Vertragsstaaten: **AT BE CH DE FR GB IT LI LU NL SE**

(71) Anmelder: **BASF Aktiengesellschaft, Carl-Bosch-Strasse 38, D-6700 Ludwigshafen (DE)**

(72) Erfinder: **Lamprecht, Josef, Dr., Londoner Ring 11, D-6700 Ludwigshafen (DE)**
Erfinder: **Ley, Gregor, Dr., In den Trankstuecken, D-6719 Wattenheim (DE)**

(54) Goniophotometer zur Messung des Glanzes und/oder des Glanzschleiers von Oberflächen.

(57) Goniophotometer zur Bestimmung des Glanzes und/oder des Glanzschleiers von Oberflächen mit einer Lichtquelle und einer oder mehreren Sammellinsen zur Beleuchtung der Oberfläche und einer Blende in der Bildebene der Lichtquelle sowie einem Lichtempfänger, wobei zwischen der Oberfläche und der Blende ein drehbar gelagerter Spiegel angeordnet ist.

Goniophotometer zur Messung des Glanzes und/oder
des Glanzschleiers von Oberflächen

Die vorliegende Erfindung betrifft ein Goniophotometer zur Bestimmung des Glanzes und/oder des Glanzschleiers von Oberflächen mit einer Lichtquelle und einer oder mehreren Sammellinsen zur Beleuchtung der Oberfläche und einer Blende in der Bildebene der Lichtquelle sowie einem Lichtempfänger.

Aus der Auslegeschrift DE-25 56 150 ist eine Vorrichtung zur Messung des Glanzvermögens von ebenen Oberflächen bekannt, bei der zur Aufnahme der winkelabhängigen Intensitätsverteilung des von der Oberfläche ausgehenden Lichtes – bei in Reflexionsrichtung feststehender Meßoptik – die Blende senkrecht zur Reflexionsrichtung bewegbar ist. Bei dieser Anordnung benötigt man eine zusätzliche Linse zur gleichmäßigen Ausleuchtung des Lichtempfängers, um Meßfehler durch örtlich verschiedene Lichtempfindlichkeit des Lichtempfängers zu vermeiden.

Aus der Auslegeschrift DE-24 02 127 ist ferner eine Vorrichtung zur Messung des Glanzschleiers von Oberflächen bekannt, bei der durch eine Ringblende in der Bildebene der Lichtquelle das unter einem bestimmten, von der Reflexionsrichtung abweichenden Winkel gestreute Licht auf einem zweiten Lichtempfänger fällt. Nachteilig bei dieser Anordnung ist die Verwendung zweier verschiedener Lichtempfänger wegen der Möglichkeit unterschiedlicher Lichtempfindlichkeiten.

Der Erfindung liegt nun die Aufgabe zugrunde, mit möglichst geringem Aufwand ein einfach zu bedienendes Gerät zu erstellen, mit dessen Hilfe man in kurzer Zeit die Winkelverteilung des Streulichtes oder bestimmte Punkte der Verteilungskurve bestimmen oder registrieren kann.

BAD ORIGINAL

Spr/BL

0020971

Diese Aufgabe wird erfindungsgemäß dadurch gelöst, daß zwischen der Probenoberfläche und der Blende ein drehbar gelagerter Spiegel angeordnet ist.

Vorteilhaft wird der Spiegel durch einen Motor, insbesondere einen Scanner- oder Schrittmotor bewegt. Der mit der Erfindung erzielte Vorteil besteht darin, daß außer dem drehbar gelagerten Spiegel keine beweglichen Teile benötigt werden und daß der Photoempfänger gleichmäßig ausgeleuchtet ist. Die gesamte Optik kann in einfacher Weise auf einer optischen Achse montiert werden.

Die Erfindung wird nachstehend anhand der Zeichnungen näher erläutert. Es zeigen

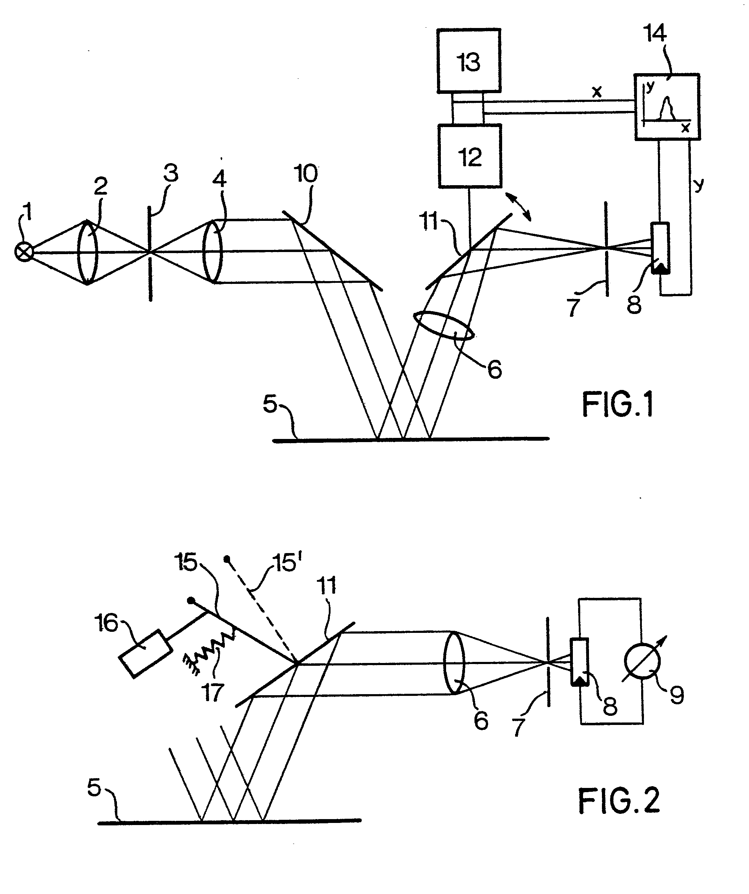

Figur 1  ein Goniophotometer mit motorbewegtem Spiegel und
Figur 2  ein Goniophotometer, bei dem nur zwei Winkeleinstellungen des Spiegels vorgesehen sind.

Durch eine Lichtquelle 1 wird ein Strahlenbündel erzeugt, das über Sammellinsen 2,4 und eine Blende 3 parallel gebündelt wird und über einen feststehenden Umlenkspiegel 10 auf die zu messende Oberfläche 5 geworfen wird. Das von der Oberfläche 5 ausgehende Licht, das sich aus reflektiertem Licht und Streulicht zusammensetzt, wird durch eine Sammellinse 6, die vor oder hinter einem drehbar gelagerten Spiegel 11 angeordnet sein kann, gebündelt und fällt durch eine feststehende Blende 7 auf einen Lichtempfänger 8. Der Spiegel 11 wird durch einen Motor 12 bewegt, der seinerseits durch ein Steuergerät 13 geregelt wird. Das der Stellung des Spiegels 11 entsprechende Signal x und das Signal y, welches der durch die Blende 7 fallenden Lichtmenge entspricht, werden durch einen x,y-Schreiber 14 aufgezeichnet.

Bei einer zweiten Ausführungsform der Erfindung kann der Spiegel 11 über einen Hebel, der mit einer Rückstellfeder 17 verbunden ist, in zwei vorgegebene Stellungen 15 und 15' gebracht werden. In der Stellung 15, die über eine Mikrometerschraube 16 justiert werden kann, fällt nur reflektiertes Licht auf den Lichtempfänger 8 und wird mit einem Meßgerät 9 gemessen. In der Stellung 15' fällt dagegen nur das unter einem bestimmten Winkel gestreute Licht auf den Lichtempfänger 8. Das Verhältnis der in den Stellungen 15 und 15' aufgezeichneten Lichtmengen ist ein Maß für den Glanzschleier der Probe.

0020971

## Patentansprüche

1. Goniophotometer zur Bestimmung des Glanzes und/oder des Glanzschleiers von Oberflächen mit einer Lichtquelle und einer oder mehreren Sammellinsen zur Beleuchtung der Oberfläche und einer Blende in der Bildebene der Lichtquelle sowie einem Lichtempfänger, dadurch gekennzeichnet, daß zwischen der Oberfläche (5) und der Blende (7) ein drehbar gelagerter Spiegel (11) angeordnet ist.

2. Goniophotometer nach Anspruch 1, dadurch gekennzeichnet, daß der Spiegel (11) durch einen Motor (12), insbesondere einen Scanner-oder Schrittmotor bewegt wird.

Zeichn.

1/1

0020971

FIG.1

FIG.2

33 909

## EUROPÄISCHER RECHERCHENBERICHT

**Europäisches Patentamt**

0020971
Nummer der Anmeldung

EP 80 10 2557

### EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| AD | <u>DE - A - 2 556 150</u> (VIANOVA KUNST-HARZ) <br> * Seiten 3-4; Figur 1 * <br><br> -- | 1 |
| A | <u>DE - A - 2 454 644</u> (VIANOVA KUNST-HARZ) <br> * Seiten 6-7; Figuren 1-2 * <br><br> -- | 1 |
| A | PROGRESS IN ORGANIC COATINGS, vol. 1, 1972 Ausg.Elsevier Sequoia S.A. Lausanne, CH <br> U. ZORLL "New aspects of gloss of paint film and its measurement", Seiten 113-115. <br> * Seiten 123-124, 125-128 * <br><br> -- | 1 |
| A | APPLIED OPTICS, vol. 8, Nr.9, September 1969, New York, USA <br> J. CHRISTIE "An instrument for the geometric attributes of metallic appearance", Seiten 1777-1785. <br> * Seiten 1777-1780 * <br><br> -- | 1 |
| AD | <u>US - A - 4 072 426</u> (H. HORN) <br> * Spalten 2-3; Figur 1 * <br><br> ---- | 1 |

**KLASSIFIKATION DER ANMELDUNG (Int. Cl.³)**

G 01 N 21/57

**RECHERCHIERTE SACHGEBIETE (Int. Cl.³)**

G 01 N 21/57
G 01 B 11/30

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 25-09-1980 | BOEHM |

EPA form 1503.1 06.78